# EUROPEAN PATENT SPECIFICATION

(11) **EP 4 081 487 B1**
(45) Date of publication and mention of the grant of the patent: **22.11.2023**
(21) Application number: 20829326.6
(22) Date of filing: 23.12.2020
(51) Int. Cl.: C02F 1/463, C02F 1/465, C02F 1/66, C02F 1/52, C02F 103/28, C02F 1/20, C02F 1/56

(54) **METHOD AND ARRANGEMENT FOR PURIFYING AQUEOUS SOLUTION**
VERFAHREN UND ANORDNUNG ZUR REINIGUNG EINER WÄSSRIGEN LÖSUNG
PROCÉDÉ ET ENSEMBLE POUR PURIFIER UNE SOLUTION AQUEUSE

(30) Priority: 23.12.2019 FI 20196128
(43) Date of publication of application: 02.11.2022
(73) Proprietor: BIOBROS OY, 70460 Kuopio (FI)
(72) Inventor: SUHONEN, Anssi, 70870 Hiltulanlahti (FI)
(74) Representative: Berggren Oy
(86) International application number: PCT/FI2020/050867
(87) International publication number: WO 2021/130416

(56) References cited:
- WO-A1-2020/061644
- CA-A- 1 232 231
- CN-A- 106 746 048
- US-A- 4 349 430

## Description

### Field of invention

The present invention relates to a method and an arrangement for purifying aqueous solutions. The method is based on an electrocoagulation treatment followed by a clarification phase and suitable for purifying most aqueous solutions such as impure natural waters and industrial process waters.

### Background

Electrocoagulation (EC) is a known technique for treating or purifying aqueous solutions such as waters generated within industrial processes. Electrocoagulation can be used for separating suspended solids such as soil particles and heavy metals, grease oil and even microbes and many medical agents from the water. Separation of solids, grease or other impurities is achieved by applying an electric current between electrode pair, an anode and a cathode, placed in the aqueous solution. The process modifies the surface charge of suspended solids leading into an agglomeration process, which allows suspended matter to agglomerate.

The anode material will dissolve into the solution, and the metal cations act as coagulation agents within the aqueous solution. The dissolved metal cations modify the surface charge of the solids leading into an agglomeration process. The agglomerates, or so-called flocs, can then be readily separated from the solution.

In addition to the anodic reactions, hydroxide ions (OH-) and microbubbles of H₂ are simultaneously released at the cathode. These hydrogen bubbles adhere into the agglomerates and enhance their rise towards the surface of the solution (so called electroflotation). When the agglomerated matter has separated on the surface of the aqueous solution, it may be removed mechanically from the solution container. The resulting solution will have a substantially reduced contaminant concentration. The EC-treated water may be discharged where found appropriate, such as being fed back to the nature or returned to an industrial process.

US 20150353387 discloses an electrolytic apparatus in which spaced electrodes treat the stream during upward flow to the open top of the chamber. The treated stream overflows the chamber and falls into an inter-wall volume between the chamber and an outside housing,

US4349430 discloses an arrangement with a vertically positioned substantially cylindrical clarification tank and an electrocoagulation chamber inside said tank, the arrangement being configured to allow upward flow of the aqueous solution.

There is still a need for improved electrocoagulation-based processes which are easy and cost effective to implement and maintain and are suitable for continued use.

### Summary of the invention

The present disclosure generally relates to purification of aqueous solutions (impure waters and water bases suspensions) by electrocoagulation-based method and arrangement. In the arrangement the electrocoagulation chamber is located inside a substantially cylindrical clarification chamber.

The first aspect of the invention is a method for purifying aqueous solutions. Characteristic steps of said method are depicted in claim 10.

The second aspect of the invention is an arrangement for purifying an aqueous solution. Characterizing features of said arrangement are depicted in claim 1.

The method and the arrangement have several advantages. The arrangement is suitable for treating several types of aqueous solutions and it is simple and easy to maintain. In addition, the space requirement is optimized. The arrangement allows a continued purification and is thus suitable for purifying large solution volumes.

### Brief description of figures

Figure 1 shows an isometric projection of an embodiment of the invention
Figure 2 shows a bottom view of an embodiment of the invention
Figure 3 shows a top view of an embodiment of the invention
Figure 4 shows a front view of an embodiment of the invention
Figure 5 shows a left view of an embodiment of the invention
Figure 6 shows an isometric projection with internal structures shown in dashed lines
Figures 7 and 8 show an embodiment of the arrangement according to the invention seen obliquely from above
Figures 9 and 10 show an embodiment of the arrangement according to the invention seen obliquely and directly from above and
Figure 11 shows an embodiment of the arrangement according to the invention seen obliquely from above.

### Description

The present invention relates to a method and an arrangement of purifying aqueous solutions using an electrocoagulation. More specifically, the present invention relates to a novel combination of electrocoagulation followed by a clarification phase using a rotational flow.

The present disclosure relates to a method for purifying aqueous solutions. The method comprises subjecting upward flowing solution to an electrocoagulation to allow accumulation of agglomerates to the uppermost volume of the flow wherein the electrocoagulation is followed by a rotational flow of the solution and separating the agglomerates from the surface of the flow. Electrocoagulation agglomerates the impurities and gas bubbles generated enhance their raise towards the surface already during the electrocoagulation process. A rotational flow allows separating the agglomerates from the main flow and easy recovery. Sludge comprising solid particles is separated from the lowermost volume of the rotational flow and purified aqueous solution is separated from the middle section of the rotational flow.

In the method the electrocoagulation is arranged by an up-ward flow between vertically positioned electrode pairs. Upward flow further enhances gathering agglomerates to the surface and can be continued as a rotational flow without undesired mixing of the separating agglomerates and more pure solution. Upward flow in the electrocoagulation step allows to be continued as a rotational uniform flow in the substantially cylinder tank and enhances the separation of the agglomerates and sludge from the pure aqueous fraction.

The aqueous solution may comprise natural waters, such as seawater, river and lake waters, impure natural waters, water from swamps and wet-lands, industrial process waters from mining, iron and steel industry, food industry, pulp & paper industry, textile dying and wood processing, filtration waters (seepage waters) from e.g. landfill areas, removal of de-icing salt or groundwater areas, waters contaminated with oil and even community waster waters, especially grey waters. Pre-screening the aqueous solution may be needed to protect the electrode system if the solution contains solid particular material.

The aqueous solution is fed to the electrocoagulation via bottom of said chamber and flows through vertically positioned electrode pairs.

The aqueous solution may be introduced to electrocoagulation using hydrostatic pressure or a pump. If the surface of the solution to be treated (during running process) can be placed below the storage of the aqueous solution to be treated no pump is necessarily needed resulting in energy savings.

The method disclosed here is suitable for continuous use instead of various batch arrangements.

Solution velocities and geometries of the outlets/inlet may be adapted to minimize turbulence and promote effective agglomeration and effective settling throughout available tank volume.

The agglomeration (formation of flocs) may be further enhanced by adding flocculants (clarifying agents) to the solution. Multivalent cations (conductivity modifiers) and polymeric flocculants can be used. Non-limiting examples are alum, aluminium chlorohydrate, aluminium sulphate, calcium oxide, calcium hydroxide, iron(II) sulphate, iron(III) chloride, polyacrylamide, polyDADMAC, sodium aluminate and sodium silicate. Polymeric flocculants may be added to the solution after the electrocoagulation step whereas multivalent cations modifying the conductivity of the suspension and solids are added before the electrocoagulation. Possible adjusting of pH may be done before the solution enters to the purification process. Agglomeration process is also affected by the properties of electrodes used. Selection of anode material may even increase selectivity of the coagulation.

The present invention relates also to an arrangement for purifying an aqueous solution. Said arrangement comprises:
- a vertically positioned substantially cylindrical clarification tank to allow a rotational flow of the aqueous solution and enhance accumulation of agglomerates to the uppermost volume of the flow; and
- an electrocoagulation chamber inside said tank configured to allow upward flow of the aqueous solution to enhance agglomeration of the dissolved solids and provide hydrogen bubbles; and
- a wall having a first surface and a second surface covering the gap between said electrocoagulation chamber and said clarification tank; and
- a first outlet for solution overflow from electrocoagulation chamber located next to first surface of the wall; and
- a second outlet positioned to upper section of the clarification tank next to the second surface of the wall for recovering agglomerates; and
- a third outlet positioned to lower section of the clarification tank next to the second surface of the wall for recovering aqueous solution or sludge; and
- an inlet for solution connected to the bottom of said coagulation chamber configured to feed the aqueous solution to said coagulation chamber.

The reaction chamber according to the invention is a cylinder. The reaction chamber may fit symmetrically into the tank at a preselected position and the size is adapted to the size of the tank and desired flow volumes. Substantially cylindric chamber allows uniform rotational flow and separation of the agglomerates and sludge from the pure aqueous fraction. Outlet from the chamber may be a groove or a slot in the upper edge of the chamber wall. In addition, fitting the reaction chamber inside the clarification tank reduces the space requirement. Said substantially cylindric clarification tank may have a regular circular form but it may also be a circular polygon. It is essential that the inner surface of the cylindric tank allows uniform rotational flow of the aqueous solution entering to said tank via the outlet from the electrocoagulation chamber (1^{st} outlet).

The electrocoagulation chamber may be installed inside the clarification tank eccentrically. Eccentrical installation means here that, the fictional midpoints of the electrocoagulation chamber and clarification tank do not coincide, whereby the cross-section of the flow route of the aqueous solution inside the clarification tank is not constant. This makes possible to regulate the flow velocity of the aqueous solution in different parts of the clarification tank. The wall covering the gap between said electrocoagulation chamber and said clarification tank means a barrier that prevents mixing of solutions. Aim is to prevent mixing of the solution entering the tank after electrocoagulation and the solution which already have been settled during the rotational flow in said tank. Said wall may be easily replaceable. In this case the inner surface and the bottom of the clarification tank and the outer surface of the electrocoagulation chamber may be equipped with grooving's, into which the plate formed wall can be fitted. Sealings may be used where necessary.

The wall may have a first curved section extending to the first vertical edge of the wall joining to the electrocoagulation chamber wall and a second curved section extending to the second vertical edge of the wall, joining to the clarification tank wall. The curved sections round off the corners between the wall and the electrocoagulation chamber and between the wall and the clarification tank. The rounded corners diminish the formation of turbulence and swirls when aqueous solution enters to the clarification and when aqueous solution escapes from the clarification tank.

Outlets of the tank (designated here as 2^{nd}, 3^{rd} and 4^{th} outlet) may be conduits that feed the recovered fractions to an external facility, drainage or depending on the purity to e.g. river and lake system. Agglomerates may also be collected using a chute.

In this connection expression "outlet positioned to uppermost section of the clarification tank" means that the outlet is positioned to the level of uppermost volume of the rotational flow. The upper section covers 0 to 20% or 0 to 10% of the height starting from the surface of the flow in the clarification tank. Expression "lowermost section" the area on the lowermost flowing volume, or a location at the bottom of the tank or in the lowest 5 or 10% of the height corresponding the level starting from the bottom of the tank (lowest edge of the inner surface of the tank). Expression "middle section" means the area between said uppermost section and said lowermost section, or uppermost and lowermost volume. It covers the 20% to 80% of the height starting from the lower edge of the inner surface of the chamber or the surface of the flow. A person skilled in the art is able to define the locations and geometries of the outlets using his common knowledge. Outlet from the electrocoagulation chamber and outlet from the clarification tank for removing agglomerates may be e.g. a simple indentation or groove on the upper edge of said chamber or tank or an opening close to the upper edge. Usually the separation between the agglomerates, purified aqueous flow and sludge is clear and the geometries of the outlets are adapted to the flowing fluid layers. Dimensions and geometries of the outlets and the inlets are adapted to comply with the flow rate, performance of the electrodes and properties of the aqueous solution to be purified. This optimization can be performed by a person skilled in the art.

The arrangement may further comprise a fourth outlet for separating the purified aqueous flow. Said outlet is located between the second and the third outlet from the clarification tank seen in the vertical direction of the clarification tank.

When the clarification tank of the arrangement comprises three outlets (shown in Figures as 2^{nd}, 3^{rd} and 4^{th} outlet) the outlet in the middle (i.e. the 4t^{h} outlet) is used to recover the fraction with highest purity, substantially free of agglomerates (flocs) and sludge. Depending on the starting solution said fraction may be for example reused in an industrial process or released to the nature. The outlet in the upper section (2^{nd} outlet) is used for collecting agglomerates and foam and the 3^{rd} outlet in the lower section is used for collecting the solids in the sludge.

When the amount of solid particles, i.e. sludge, contained in the water to be purified is low, the arrangement may comprise only two outlets; the second outlet positioned to uppermost section of the clarification tank for recovering agglomerates and a third outlet positioned to lowermost section of the clarification tank for recovering aqueous solution (Figure not shown).

The electrocoagulation chamber is equipped with vertically positioned electrodes, in practice one or more pair(s) of anode and cathode. Electrodes may be plates placed with certain spacing allowing the vertical flow of the solution. A person skilled in the art is able to define a suitable spacing based on performance of electrodes, solution flow rate and characteristics of the solution. As an example, the spacing may be 3 to 25 mm or 3 to 12 mm. Smaller spacing ensures the smaller need of current without compromising the performance. As evident to a person skilled in the art, the spacing tends to increase as the anode wears out resulting in increased power usage.

Alternatively, the electrodes may be a nested pair of conduits allowing flow of the solution between the oppositely charged conduits or electrodes may be a series of vertically places bars or rods. Geometry of the electrodes is not decisive as far as it does not restrict the flow and provides sufficient current for electrolysis.

The combination of the upward solution flow between the vertically positioned electrodes enhances gathering the agglomerates to the surface (and uppermost volume) of the solution to be treated. Due to the geometry of the arrangement the flow continues as a rotational flow inside the clarification chamber, where the separation of agglomerates, pure solution fraction (water) and sludge continues based on gravitational force.

The upper edge of the electrodes should be below the edge of the electrocoagulation chamber. This enhances a uniform flow from said chamber to the clarification tank and thereby the separation of the agglomerates.

Due to practical reasons the upper edge of the clarification tank usually extents to the same level or above the upper edge of the electrocoagulation chamber. This reduces the risk of overflow of the solution. The wall between the inner surface of the clarification tank and the external surface of the electrocoagulation chamber extends thorough the inner height of said clarification chamber. Aim is to prevent mixing of the solution entering the tank after electrocoagulation and the solution which already have been settled during the rotational flow in said tank.

The arrangement also comprises a direct-current source for the electrodes and connection known within the art.

The solution flow is introduced via an inlet in the bottom of the electrocoagulation chamber. The inlet may be a conduit leading through the bottom of the tank and connected to the bottom of the electrocoagulation chamber. Said inlet may be equipped with multiple openings providing a uniform upward flow inside the electrocoagulation chamber and between the electrodes. The inlet may be equipped by a pump or a valve. The pressure of incoming solution flow must be sufficient to rise the solution via the electrocoagulation chamber until it overflows to the clarification tank via an outlet for solution overflow from electrocoagulation chamber (designated as 1^{st} outlet). This may be achieved by location the arrangement (surface of the solution to be treated when the arrangement is in operation) downwards from the storage tank or other source for aqueous solution to be treated. The flow rate of the incoming aqueous solution can be controlled using pumps or valves and adapted to performance of the electrodes (mA per cm²) and properties of the solution to be purified.

The arrangement may comprise scraping means for enhancing separation of the agglomerates in the clarification tank. The separation of agglomerates accumulated on the surface of the rotational flow may be enhanced by using a scraper or any appropriate mechanical means (e.g. a scoop) from the top of the water surface. It may be an automated movement of the mechanical means or it may also be performed manually. The aim is to collect the agglomerates to the outlet (2^{nd} outlet) positioned to upper section of the clarification tank next to the second surface of the wall using manual or automated scraping means.

The arrangement may comprise scraping means for enhancing separation of the sludge in the bottom of the clarification tank. The separation of sludge and sediment accumulated on the bottom of the clarification tank may be enhanced by using a scraper or any appropriate mechanical means (e.g. a scoop). The aim is to collect the sludge and possible sediment to the outlet (3^{rd} outlet) positioned to the bottom or the lowermost section of the clarification tank next to the second surface of the wall using automated scraping means.

Scraping means are known with the art and a person skilled in the art is able to select suitable means.

The electrocoagulation chamber may be modular to be replaced easily. The electrocoagulation chamber may be configured to allow easy replacement. Similarly sized electrocoagulation chambers can be easily replaced and allow some of variation in performance of the electrode package.

Alternatively, or in addition, electrodes may be configured to allow easy replacement. Anode will wear out during the process and thus it may be beneficial to replace it more often than the whole set of electrodes or the electrocoagulation chamber.

Opposite inner size surfaces (disregarding whether the form is rectangle or cylindric as shown is the Figures) may be configured to support electrode plates of a preselected thickness at a preselected spacing. The supporting surface may be grooved to establish vertical reception slots for each electrode plate thereby allowing easy replacement of single electrode plate(s), typically anode(s).

The arrangement may further comprise means for introducing auxiliary substances to the electrocoagulation chamber and/or to the clarification tank. The means may be conduits leading the auxiliary substance(s) to the solution. Substances modifying conductivity, such as multivalent cations, may be added to the lower part of the electrocoagulation chamber or to the inlet into said chamber. Polymeric agglomeration agents may be added to the clarification tank, preferably close to the outlet from the electrocoagulation chamber (first outlet).

Possible acids and bases for adjusting pH are preferably added to the storage tank or system before the solution to be treated is introduced to the purification arrangement here disclosed.

The arrangement may further comprise a pre-screening system for removing particulate material from the solution to be treated. Solid particles having diameter exceeding or being close the spacing of the electrode pairs may prevent the flow and even block part of the flow channels. In addition, particulate material causes a risk of short circuit.

The arrangement may further comprise a hood covering the clarification tank and/or the electrocoagulation chamber. The hood is used for collecting harmful gaseous substances, such as hydrogen, which are developed or released during the purifying process of aqueous solutions.

As a non-limiting example, the arrangement can be built to a storage tank in connection or to proximity of a running paper and board manufacturing plant. The electrocoagulation chamber, wall structure, inlet for solution to be purifies and necessary outlets must be added. This allows processing large solution volumes onsite and returning them back to the process or to the natural waters. The need space and investing cost are reasonable low.

### Description of an embodiment with references to drawings

Reference is now made to Figures illustrating embodiments of the arrangement described here in form of a non-restrictive embodiments. In the figures a dashed line is used to show internal structures. The same reference numbering is used in each Figure.

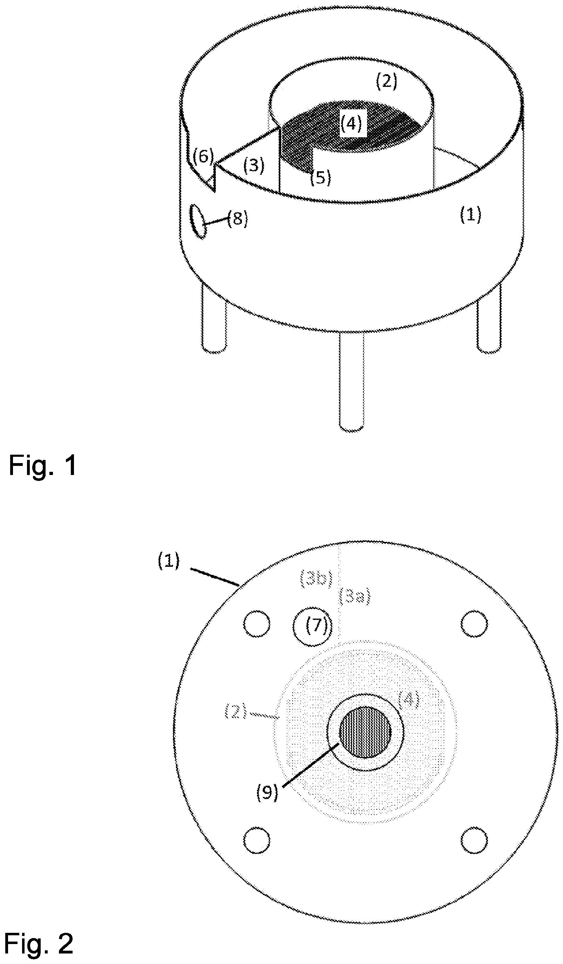

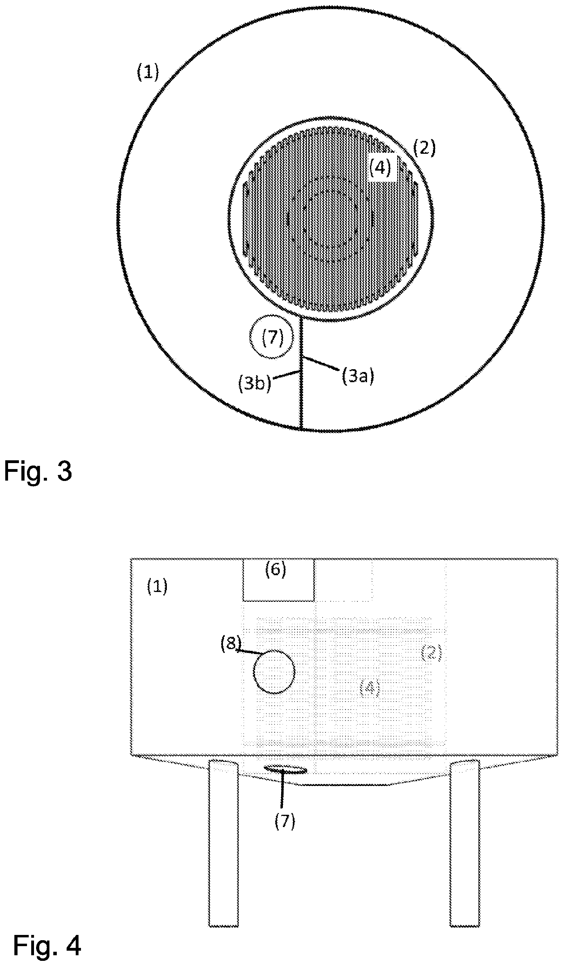

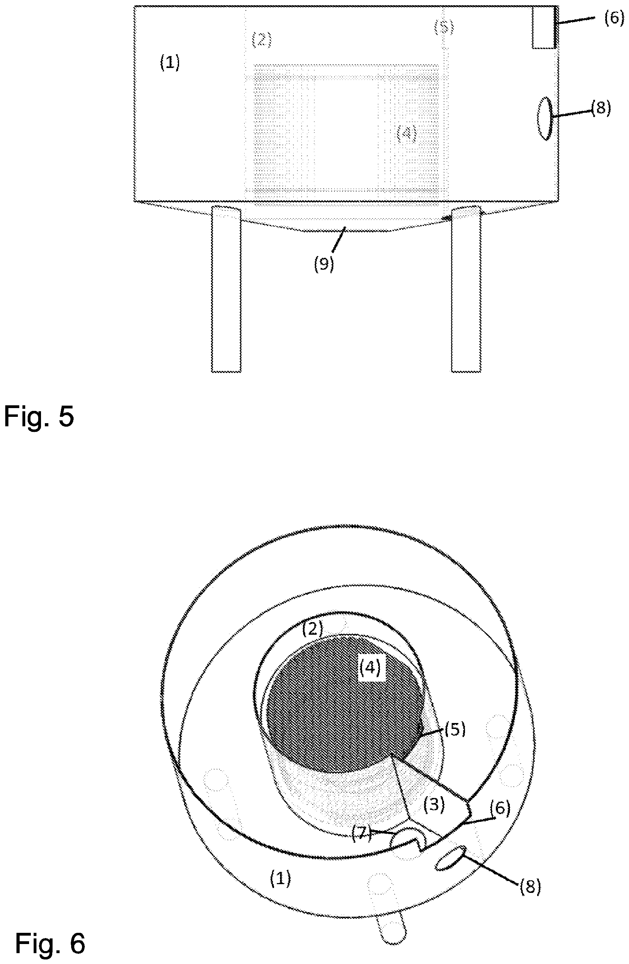

In figures 1 to 6 a first embodiment of arrangement according to the invention is depicted from different directions. In the following all figures are explained simultaneously.

The arrangement according to the invention comprises a cylindrical clarification tank 1; electrocoagulation chamber 2; wall 3; vertical electrodes 4; first outlet 5 i.e. an outlet for solution overflow from electrocoagulation chamber; second outlet 6 i.e. an outlet positioned to the uppermost section of the clarification tank next to the second surface of the wall for recovering agglomerates; third outlet 7 i.e. an outlet positioned to the lowermost section or the bottom of the clarification tank next to the second surface of the wall for separating impurities in form of solid particles, i.e. sludge, and the fourth outlet 8, i.e. an outlet located between the second and the third outlet, for recovering purified aqueous solution; an inlet for solution 9 connected to the bottom of said coagulation chamber configured to feed the aqueous solution to said coagulation chamber. The first side of the wall 3 is shown as 3a, and the second side of the wall is shown as 3b.

The aqueous solution to be purified is introduced into the electrocoagulation chamber 2 via inlet 9 located in the bottom of the tank 1. During an electrocoagulation both the aqueous solution and the agglomerates flow up-wards.

The active electrocoagulation will take place in the narrow gaps between each electrode plate pairs 4 located in the electrocoagulation chamber 2. The number of plate pairs can be any positive integer value. Electric current from an external electric current source (not shown) to each of the pairs of active electrode plates enables the electrocoagulation process between the plates.

After the electrocoagulation the treated solution pours out of the chamber 2 through the first outlet 5 and enters to clarification tank 1, next to the first side of wall 3. The wall 3 having a first surface 3a and a second surface 3b covers the gap between said electrocoagulation chamber and said clarification tank forces the flowing solution into a rotational flow. The first surface 3a next to the first outlet (i.e. passage from the electrocoagulation chamber to the clarification tank) leads the solution to a rotational flow within said tank. The second (opposite) surface of said wall forces the flow (after the rotation) towards the outlets from said clarification tank.

The inner surface and the bottom of the tank 1 and outer surface of the chamber 2 may be provided by a groove structure made e.g. by rubber. The wall 3 may be located in these grooves so that the connection there would be watertight.

During the rotational flow the agglomerates and foam will continue rising to the top of the surface and sludge comes down to the bottom of the tank 1. After almost full rotation inside the clarification tank 1 the sludge is in the lowermost volume of the flow, agglomerates are in the uppermost volume or on the surface whereas pure water is in the middle. The second side of the wall 3b forces the flow towards outlets from the tank.

The second outlet 6 positioned to the uppermost section of the clarification tank next to the second surface of the wall 3b for recovering agglomerates is used to gather the agglomerates and foam on the surface of the solution. The agglomerates may be scraped with a physical scraper (optional, not shown) or any appropriate mechanical means from the top of the solution surface.

The third outlet 7 positioned to the lowermost section of the clarification tank, preferably to the bottom of the tank, next to the second surface of the wall 3b will be used to separate sludge settled to the lowermost section of the tank and/or sediment, ie. solid particles settled and accumulated to the bottom of the tank.

The fourth outlet 8, locating between the second outlet and the third outlet seen in the vertical direction of the tank is used to collect purified aqueous solution, i.e. substantially pure water. Purified solution may be led to a clean water storage, back to the process or to the nature.

The functioning of the method is continuous, i.e. there is a continuous and flow of an aqueous solution through the electrocoagulation chamber 2 and the clarification tank 1, making the use simple and enabling also treating very large volumes of aqueous solutions.

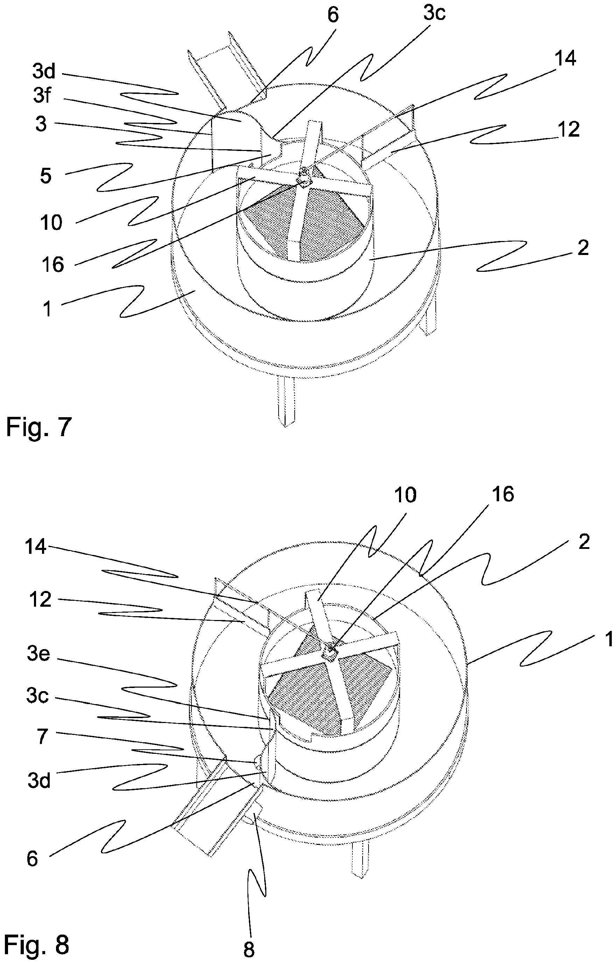

Figures 7 and 8 illustrate a second embodiment of the arrangement according to the invention seen obliquely from above. In the following both figures are explained simultaneously.

The embodiment of the arrangement depicted in figures 7 and 8 includes the same features as the first embodiment explained above. This second embodiment differs from the first embodiment in that the wall 3 is not straight, but it has two curved sections; a first curved section 3c and a second curved section 3d. The first curved section extends from the middle part of the wall 3 to the first vertical edge 3e of the wall, which joins to the surface of electrocoagulation chamber 2. The second curved section 3d extends from the middle part of the wall to the second vertical edge 3f, which joins to the surface of clarification tank 1. The curved sections round off the corners between the wall and the electrocoagulation chamber 2 and between the wall and the clarification tank 1. The rounded corners diminish the formation of turbulence and swirls when aqueous solution enters to the clarification tank via first outlet 5 and when aqueous solution leaves to the clarification tank 1 via third 7 and fourth outlet 8. Smooth rotational flow enhances the settlement of solid particles and formation of agglomerations.

The second embodiment further differs from the first embodiment in that it has scraping means for enhancing separation of the agglomerates. Said scraping means comprise as rubber blade 12 installed to an arm 14, which is rotated by an electric motor 16. The motor is supported above the electrocoagulation chamber 2 via a support frame 10. The support frame has legs, which are fixed to the walling of the electrocoagulation chamber 2. The lowermost edge of the blade extends to the surface of the aqueous solution in the clarification tank 1, when the arrangement is in operation. Rotating blade collects the agglomerations from the surface of the aqueous solution and forces these out of clarification tank through the second outlet 6. Flexible rubber blade bends slightly when it crosses the upper edge of the wall 3 during rotational movement.

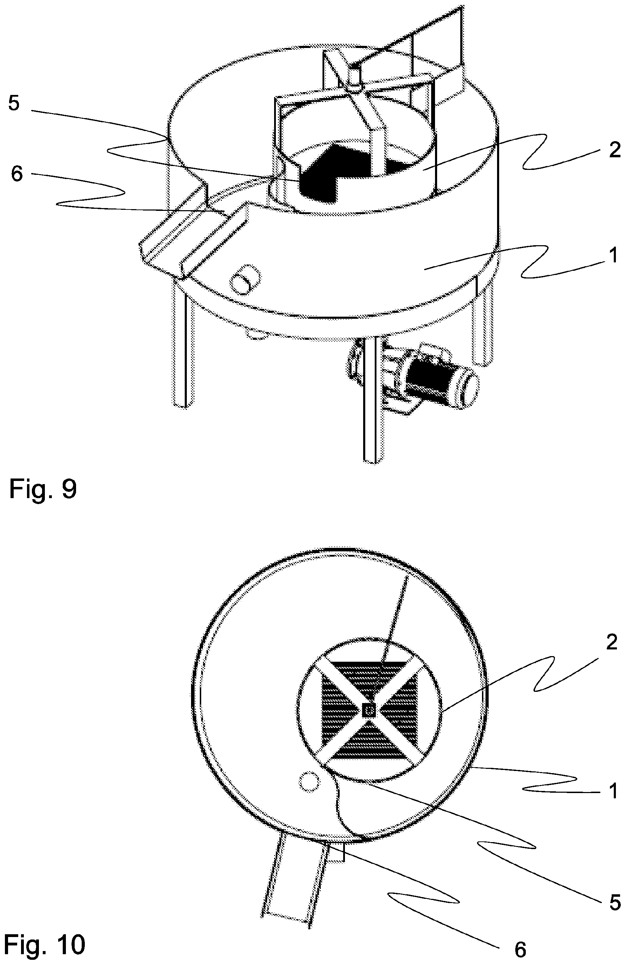

Figures 9 and 10 illustrate a third embodiment of the arrangement according to the invention. In figure 9 the embodiment is shown obliquely from above and in figure 10 directly from above. In the following both figures are explained simultaneously.

The embodiment of the arrangement depicted in figures 9 and 10 includes the same features as the second embodiment explained above. This third embodiment differs from the second embodiment in that the electrocoagulation chamber 2 is placed eccentrically inside the clarification tank 1, i.e. the fictional midpoints of the cylindrical electrocoagulation chamber 2 and cylindrical clarification tank 1 do not coincide. As a consequence of this, the cross-section of the flow route of the aqueous solution inside the clarification tank is not constant, but it chances during the rotational flow of the water to be purified. The distance between the walls of the electrocoagulation chamber 2 and cylindrical clarification tank 1 near the first outlet 5 is smaller than the distance between the walls near the second outlet 6. When the cross-section of the flow route decreases, the velocity of the flow increases and when the cross- section of the flow route increases, the velocity of the flow decreases respectively. Eccentric placement of the electrocoagulation chamber 2 inside the clarification tank 1 thus makes it possible to slow down the flow velocity of the aqueous solution for enhancing settlement, flocculation and agglomeration.

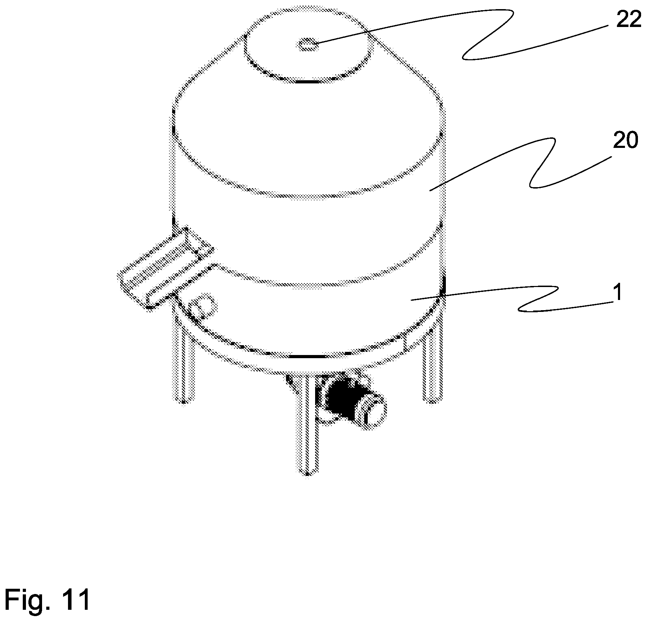

Figure 11 illustrates a fourth embodiment of the arrangement according to the invention. In figure 11 the embodiment is shown obliquely from above. The embodiment of the arrangement depicted in figure 11 comprises a substantially gastight hood 20 covering the open upper area of the clarification tank 1 and the electrocoagulation chamber. The hood is used for collecting harmful gaseous substances, which are developed or released during the purifying process of aqueous solutions. Gaseous substances released in electrocoagulation process include at least of H₂ -molecules, i.e. hydrogen gas. Depending on the nature of impurities of the aqueous solution other harmful gaseous substances may be released as well.

The hood 20 comprises a cylindrical lower part and an upper part, which has a form of a truncated cone. In the uppermost end of the hood there is an exhaust opening 22, through which gaseous substances are directed out of the hood to atmosphere or to a ventilation system. The hood can be furnished with a recovery system for recovering exploitable substances. The hood depicted in figure 11 can be used in all of the embodiments of the arrangement explained above. The hood may be dimensioned to cover only the electrocoagulation chamber.

Some preferred embodiments of the method and arrangement according to the invention has been disclosed above. The invention is not limited to these embodiments, but the invention can be applied in different ways within the limits set by the patent claims.

## Claims

1. An arrangement for purifying an aqueous solution comprising:
- a vertically positioned substantially cylindrical clarification tank (1); and
- an electrocoagulation chamber (2) inside said tank configured to allow upward flow of the aqueous solution
**characterized in that** said electrocoagulation chamber (2) is substantially cylindrical and equipped with vertically positioned electrodes (4), and said arrangement further comprises
- a gap between said electrocoagulation chamber (2) and said clarification tank (1); and
- a vertical wall (3) covering the gap between said electrocoagulation chamber (2) and said clarification tank (1) and extending through the inner height of said clarification tank (1), said wall (3) having a first surface (3a) and a second surface (3b);
- the first surface (3a) being configured to lead the aqueous solution to a rotational flow within said clarification tank (1), and
- an inlet (9) for solution connected to the bottom of said electrocoagulation chamber (2) configured to feed the aqueous solution to said electro coagulation chamber (2): and
- a first outlet (5) in the upper edge of the wall of the electrocoagulation chamber (2) for solution overflow from electrocoagulation chamber to the clarification tank (1), said first outlet (5) locating next to first surface of the wall (3); and
- a second outlet (6) positioned to uppermost section of the clarification tank next to the second surface of the wall (3) for recovering agglomerates; and
- a third outlet (7) positioned to lowermost section of the clarification tank next to the second surface of the wall (3) for recovering aqueous solution or sludge,
- the second surface of said wall (3) being configured to force the rotational flow from said clarification tank (1) towards the outlets.

2. The arrangement of claim 1, wherein the electrocoagulation chamber (2) is inside the clarification tank (1) eccentrically.

3. The arrangement of claims 1 or 2, wherein the wall (3) has a first curved section (3c) extending to the first vertical edge (3e) of the wall (3) joining to the electrocoagulation chamber (2) wall and a second curved section (3d) extending to the second vertical edge (3f) of the wall (3) joining to the clarification tank (1) wall.

4. The arrangement of any of the claims 1 to 3, wherein said arrangement further comprises a fourth outlet (8) located between the second and the third outlet.

5. The arrangement of any of the claims 1 to 4, wherein the inlet is equipped with a pump or a valve.

6. The arrangement of any of the claims 1 to 5, further comprising scraping means for enhancing separation of the agglomerates.

7. The arrangement of any of the claims 1 to 6, further comprising scraping means for enhancing separation of the sludge.

8. The arrangement of any of the claims 1 to 7, further comprising means for introducing auxiliary substances.

9. The arrangement of any of the claims 1 to 8, further comprising a hood 20 covering the clarification tank (1) and/or the electrocoagulation chamber (2).

10. A method for purifying aqueous solutions using the arrangement according to claims 1 to 9 comprising subjecting an upward flowing solution to an electrocoagulation followed by a rotational flow of the solution and separating the agglomerates from the surface of the flow, **characterized in**
- feeding aqueous solution to an electrocoagulation chamber (2) via an inlet (9) in the bottom of said electrocoagulation chamber (2) for creating agglomerates to the upward flowing aqueous solution through electrocoagulation
- pouring said aqueous solution out of said electrocoagulation chamber (2) through the first outlet (5) to a clarification tank (1),
- forcing said aqueous solution into a rotational flow in the clarification tank (1),
- recovering agglomerates from the surface of the aqueous solution after rotation through a second outlet (6).

11. The method of claim 10, **characterized in that** the method further comprises separating sludge from the lowermost volume of the rotational flow and separating purified aqueous solution from the middle section of the rotational flow.

12. The method of any of the claims 10-11, **characterized in that** the aqueous solution comprises natural waters, industrial process waters, filtration waters and grey waters.

13. The method of any of the claims 10-12, **characterized in that** the aqueous solution is introduced to electrocoagulation using hydrostatic pressure or a pump.

14. The method of any of the claims 10-13, **characterized in that** the method is continuous.

## Patentansprüche

1. Anordnung zum Reinigen einer wässrigen Lösung, welche Folgendes umfasst:
- einen vertikal angeordneten, im Wesentlichen zylindrischen Klärtank (1); und
- eine Elektrokoagulationskammer (2) innerhalb des Tanks, die so konfiguriert ist, dass sie einen Aufwärtsfluss der wässrigen Lösung ermöglicht
**dadurch gekennzeichnet, dass** die Elektrokoagulationskammer (2) im Wesentlichen zylindrisch ist und mit vertikal angeordneten Elektroden (4) ausgestattet ist, und dass die Anordnung ferner Folgendes umfasst
- einen Spalt zwischen der Elektrokoagulationskammer (2) und dem Klärtank (1); und
- eine vertikale Wand (3), die den Spalt zwischen der Elektrokoagulationskammer (2) und dem Klärtank (1) abdeckt und sich über die innere Höhe des Klärtanks (1) erstreckt, wobei die Wand (3) eine erste Oberfläche (3a) und eine zweite Oberfläche (3b) aufweist;
- wobei die erste Oberfläche (3a) so konfiguriert ist, dass sie die wässrige Lösung zu einer Rotationsströmung innerhalb des Klärtanks (1) führt, und
- einen Einlass (9) für die Lösung, der mit dem Boden der Elektrokoagulationskammer (2) verbunden ist und so konfiguriert ist, dass er die wässrige Lösung der Elektrokoagulationskammer (2) zuführt; und
- einen ersten Auslass (5) in der oberen Kante der Wand der Elektrokoagulationskammer (2) zum Überlaufen der Lösung aus der Elektrokoagulationskammer in den Klärtank (1), wobei der erste Auslass (5) neben der ersten Oberfläche der Wand (3) angeordnet ist; und
- einen zweiten Auslass (6), der im obersten Abschnitt des Klärtanks neben der zweiten Oberfläche der Wand (3) angeordnet ist, um Agglomerate zurückzugewinnen; und
- einen dritten Auslass (7), der im untersten Abschnitt des Klärtanks neben der zweiten Oberfläche der Wand (3) angeordnet ist, um wässrige Lösung oder Schlamm zu gewinnen,
- wobei die zweite Oberfläche der Wand (3) so gestaltet ist, dass sie die Rotationsströmung aus dem Klärtank (1) zu den Auslässen drückt.

2. Anordnung nach Anspruch 1, wobei sich die Elektrokoagulationskammer (2) exzentrisch innerhalb des Klärtanks (1) befindet.

3. Anordnung nach Anspruch 1 oder 2, wobei die Wand (3) einen ersten gekrümmten Abschnitt (3c) aufweist, der sich bis zur ersten vertikalen Kante (3e) der Wand (3) erstreckt, die an die Wand der Elektrokoagulationskammer (2) anschließt, und einen zweiten gekrümmten Abschnitt (3d), der sich bis zur zweiten vertikalen Kante (3f) der Wand (3) erstreckt, die an die Wand des Klärtanks (1) anschließt.

4. Anordnung nach einem der Ansprüche 1 bis 3, wobei die Anordnung ferner einen vierten Auslass (8) umfasst, der zwischen dem zweiten und dem dritten Auslass angeordnet ist.

5. Anordnung nach einem der Ansprüche 1 bis 4, wobei der Einlass mit einer Pumpe oder einem Ventil ausgestattet ist.

6. Anordnung nach einem der Ansprüche 1 bis 5, die ferner Abstreifmittel zur Verbesserung der Trennung der Agglomerate umfasst.

7. Anordnung nach einem der Ansprüche 1 bis 6, die ferner Abstreifmittel zur Verbesserung der Trennung des Schlamms umfasst.

8. Anordnung nach einem der Ansprüche 1 bis 7, die ferner Mittel zum Einbringen von Hilfsstoffen umfasst.

9. Anordnung nach einem der Ansprüche 1 bis 8, ferner umfassend eine Haube 20, die den Klärtank (1) und/oder die Elektrokoagulationskammer (2) abdeckt.

10. Verfahren zur Reinigung wässriger Lösungen unter Verwendung der Anordnung nach einem der Ansprüche 1 bis 9, bei dem eine aufwärts fließende Lösung einer Elektrokoagulation unterzogen wird, gefolgt von einer Rotationsströmung der Lösung und Trennung der Agglomerate von der Oberfläche der Strömung, **gekennzeichnet durch** Folgendes
- Zuführen einer wässrigen Lösung zu einer Elektrokoagulationskammer (2) über einen Einlass (9) im Boden der Elektrokoagulationskammer (2) zur Erzeugung von Agglomeraten in der aufwärts fließenden wässrigen Lösung durch Elektrokoagulation
- Gießen der wässrigen Lösung aus der Elektrokoagulationskammer (2) durch den ersten Auslass (5) in einen Klärtank (1),
- Zwingen der wässrigen Lösung in eine Rotationsströmung in dem Klärtank (1),
- Rückgewinnung von Agglomeraten von der Oberfläche der wässrigen Lösung nach der Rotation durch einen zweiten Auslass (6).

11. Verfahren nach Anspruch 10, **dadurch gekennzeichnet, dass** das Verfahren ferner die Trennung von Schlamm aus dem untersten Volumen des Rotationsstroms und die Abtrennung von gereinigter wässriger Lösung aus dem mittleren Abschnitt des Rotationsstroms umfasst.

12. Verfahren nach einem der Ansprüche 10-11, **dadurch gekennzeichnet, dass** die wässrige Lösung natürliche Wässer, industrielle Prozesswässer, Filtrationswässer und Grauwässer umfasst.

13. Verfahren nach einem der Ansprüche 10-12, **dadurch gekennzeichnet, dass** die wässrige Lösung der Elektrokoagulation mit Hilfe von hydrostatischem Druck oder einer Pumpe zugeführt wird.

14. Verfahren nach einem der Ansprüche 10-13, **dadurch gekennzeichnet, dass** das Verfahren kontinuierlich durchgeführt wird.

## Revendications

1. Agencement pour purifier une solution aqueuse comprenant :
- un réservoir de clarification sensiblement cylindrique positionné verticalement (1) ; et
- une chambre d'électrocoagulation (2) à l'intérieur dudit réservoir configurée pour permettre un écoulement vers le haut de la solution aqueuse **caractérisé en ce que** ladite chambre d'électrocoagulation (2) est sensiblement cylindrique et équipée d'électrodes positionnées verticalement (4), et ledit agencement comprend en outre
- un espace entre ladite chambre d'électrocoagulation (2) et ledit réservoir de clarification (1) ; et
- une paroi verticale (3) couvrant l'espace entre ladite chambre d'électrocoagulation (2) et ledit réservoir de clarification (1) et s'étendant à travers la hauteur interne dudit réservoir de clarification (1), ladite paroi (3) ayant une première surface (3a) et une seconde surface (3b) ;
- la première surface (3a) étant configurée pour amener la solution aqueuse vers un écoulement rotatif à l'intérieur dudit réservoir de clarification (1), et
- une entrée (9) pour solution connectée au fond de ladite chambre d'électrocoagulation (2) configurée pour alimenter la solution aqueuse vers ladite chambre d'électrocoagulation (2) ; et
- une première sortie (5) dans le bord supérieur de la paroi de la chambre d'électrocoagulation (2) pour le débordement de solution de la chambre d'électrocoagulation vers le réservoir de clarification (1), ladite première sortie (5) étant située à côté de la première surface de la paroi (3) ; et
- une deuxième sortie (6) positionnée sur la section la plus haute du réservoir de clarification à côté de la seconde surface de la paroi (3) pour récupérer des agglomérats ; et
- une troisième sortie (7) positionnée dans la section la plus basse du réservoir de clarification à côté de la seconde surface de la paroi (3) pour récupérer une solution aqueuse ou une boue,
- la seconde surface de ladite paroi (3) étant configurée pour forcer l'écoulement rotatif depuis ledit réservoir de clarification (1) vers les sorties.

2. Agencement selon la revendication 1, dans lequel la chambre d'électrocoagulation (2) est située à l'intérieur du réservoir de clarification (1) de manière excentrique.

3. Agencement selon les revendications 1 ou 2, dans lequel la paroi (3) présente une première section incurvée (3c) s'étendant jusqu'au premier bord vertical (3e) de la paroi (3) se joignant à la paroi de chambre d'électrocoagulation (2) et une seconde section incurvée (3d) s'étendant jusqu'au second bord vertical (3f) de la paroi (3) se joignant à la paroi de réservoir de clarification (1).

4. Agencement selon l'une quelconque des revendications 1 à 3, dans lequel ledit agencement comprend en outre une quatrième sortie (8) située entre la deuxième et la troisième sortie.

5. Agencement selon l'une quelconque des revendications 1 à 4, dans lequel l'entrée est équipée d'une pompe ou d'une vanne.

6. Agencement selon l'une quelconque des revendications 1 à 5, comprenant en outre un moyen de raclage pour améliorer la séparation des agglomérats.

7. Agencement selon l'une quelconque des revendications 1 à 6, comprenant en outre un moyen de raclage pour améliorer la séparation de la boue.

8. Agencement selon l'une quelconque des revendications 1 à 7, comprenant en outre un moyen pour introduire des substances auxiliaires.

9. Agencement selon l'une quelconque des revendications 1 à 8, comprenant en outre un capot 20 recouvrant le réservoir de clarification (1) et/ou la chambre d'électrocoagulation (2).

10. Procédé de purification de solutions aqueuses à l'aide de l'agencement selon les revendications 1 à 9, comprenant la soumission d'une solution s'écoulant vers le haut à une électrocoagulation suivie d'un écoulement rotatif de la solution et de la séparation des agglomérats de la surface de l'écoulement, **caractérisé par**
- l'alimentation d'une solution aqueuse dans une chambre d'électrocoagulation (2) via une entrée (9) dans le fond de ladite chambre d'électrocoagulation (2) pour créer des agglomérats dans la solution aqueuse s'écoulant vers le haut par électrocoagulation
- le versement de ladite solution aqueuse hors de ladite chambre d'électrocoagulation (2) à travers la première sortie (5) vers un réservoir de clarification (1),
- le fait de forcer ladite solution aqueuse dans un écoulement rotatif dans le réservoir de clarification (1),
- la récupération d'agglomérats de la surface de la solution aqueuse après rotation à travers une deuxième sortie (6).

11. Procédé selon la revendication 10, **caractérisé en ce que** le procédé comprend en outre la séparation de boue du volume le plus bas de l'écoulement rotatif et la séparation de la solution aqueuse purifiée de la section médiane de l'écoulement rotatif.

12. Procédé selon l'une quelconque des revendications 10 et 11, **caractérisé en ce que** la solution aqueuse comprend des eaux naturelles, des eaux de procédés industriels, des eaux de filtration et des eaux grises.

13. Procédé selon l'une quelconque des revendications 10 à 12, **caractérisé en ce que** la solution aqueuse est introduite dans l'électrocoagulation à l'aide d'une pression hydrostatique ou d'une pompe.

14. Procédé selon l'une quelconque des revendications 10 à 13, **caractérisé en ce que** le procédé est continu.
